# EUROPÄISCHE PATENTSCHRIFT

(11) **EP 3 791 027 B1**
(45) Veröffentlichungstag und Bekanntmachung des Hinweises auf die Patenterteilung: **07.08.2024**
(21) Anmeldenummer: 19723753.0
(22) Anmeldetag: 08.05.2019
(51) Int. Cl.: E03F 1/00, E03B 3/03

(54) **FÜLLKÖRPERRIGOLENEINHEIT, FÜLLKÖRPERRIGOLENSYSTEM UND SCHACHTELEMENT**
DRAINAGE BODY UNIT, DRAINAGE BODY SYSTEM AND SHAFT ELEMENT
UNITÉ DE RIGOLE DE CORPS DE REMPLISSAGE, SYSTÈME DE RIGOLE DE CORPS DE REMPLISSAGE ET ÉLÉMENTS DE REGARD

(30) Priorität: 11.05.2018 DE 102018111300
(43) Veröffentlichungstag der Anmeldung: 17.03.2021
(73) Patentinhaber: ACO Ahlmann SE & Co. KG, 24782 Büdelsdorf (DE)
(72) Erfinder: MESSERSCHMIDT, Heino, 25585 Lütjenwestedt (DE); PRAKESCH, Stefan, 73249 Wernau (DE); SIEVERS, Anja, 24768 Rendsburg (DE)
(74) Vertreter: Meissner Bolte Partnerschaft mbB
(86) Internationale Anmeldenummer: PCT/EP2019/061831
(87) Internationale Veröffentlichungsnummer: WO 2019/215238

(56) Entgegenhaltungen:
- EP-A1- 2 085 527
- EP-A2- 0 877 126
- CN-U- 202 000 464
- DE-A1- 3 418 813
- US-B1- 9 732 508

## Beschreibung

Die Erfindung betrifft eine Füllkörperrigoleneinheit und ein Schachtelement für eine derartige Füllkörperrigoleneinheit.

Bei bestehenden Füllkörperrigolen gibt es derzeit zwei Problemstellungen. Zum einen müssen Füllkörperrigolen davor geschützt werden, in ihrem Inneren zu versanden oder zu verschlammen. Zum anderen muss auf der Auslaufseite der Rigole der Wasserstrom regelbar sein, da aufgrund behördlicher Vorgaben eine maximale Wasserauslaufmenge vorgeschrieben ist. Dazu ist eine Drossel vorgesehen, deren Aufgabe es ist, das nachgelagerte Kanalnetz bzw. den nachgelagerten Vorfluter zu entlasten. Dies geschieht mit einer statischen Drossel ohne bewegte Teile oder einer dynamischen Drossel mit veränderbarem Durchflussquerschnitt. Dynamische Drosseln können den Abflusswert konstant halten. Das führt zu kleineren Retentionsbecken, da sich im Regelbetrieb immer der maximale Abflusswert einstellt. Gleichzeitig kann der Betreiber für z.B. den Reinigungsbetrieb oder den Notfallbetrieb feste Einstellungen vornehmen, um damit z.B. zur Schadensminderung im Starkregenereignis beizutragen. Es gibt auch Konstantdrosseln, die in Abhängigkeit vom Wasserstand sich selbst regeln, deren Platzbedarf aber sehr groß ist.

In EP 2 085 527 A1 ist eine Anlage zu Regenwasserbewirtschaftung beschrieben, die ein Speichervolumen aus Rigolenkörper umfasst. Aus US 9 732 508 B1 sind wabenförmige Rigolenkörper bekannt, die miteinander verbindbar sind.

DE 34 18 813 A1 zeigt ein Entwässerungssystem mit einer Drosselvorrichtung.

EP 1 526 223 B1 beschreibt eine Rigolenanordnung, bei der der Zulauf des Niederschlagswassers durch einen seitlichen Zulaufschacht erfolgt, der mit den Rigolen verbunden ist. Die Entnahme des Niederschlagswassers erfolgt durch einen Entnahmeschacht, der die Rigolen von oben vertikal durchsetzt. Im Zulauf- bzw. Entnahmeschacht sind Funktionselemente, nämlich eine Flüssigkeitsleitung, eine kombinierte Pumpen- und Filtereinheit sowie ein Füllstandsmessgerät angeordnet. Die bekannte Rigolenanordnung ist aufwendig und benötigt relativ viel Platz.

Der Erfindung liegt die Aufgabe zu Grunde, eine Füllkörperrigoleneinheit anzugeben, die den Verbau eines Füllkörperrigolensystems vereinfacht, an ein Kanalisationsnetz angeschlossen werden kann und vor Zusetzen mit Feststoffen geschützt ist. Der Erfindung liegt ferner die Aufgabe zu Grunde, ein Füllkörperrigolensystem und ein Schachtelement für eine derartige Füllkörperrigoleneinheit anzugeben.

Erfindungsgemäß wird die Aufgabe mit Blick auf die Füllkörperrigoleneinheit durch den Gegenstand des Anspruchs 1 und mit Blick auf das Füllkörperrigolensystem durch den Gegenstand des Anspruchs 14 gelöst.

Konkret wird die Aufgabe durch eine Füllkörperrigoleneinheit mit wenigstens einem Füllkörperrigolenelement, wenigstens einem ersten Schachtelement und wenigstens einem zweiten Schachtelement gelöst. Im ersten Schachtelement ist ein Reinigungselement zwischen einem Fluidzulauf und einem Fluidablauf angeordnet. Ein Drosselelement ist im zweiten Schachtelement zwischen einem Fluidzulauf und einen Fluidablauf angeordnet. Die Schachtelemente sind mit einem oder mehreren Füllkörperrigolenelementen fluidverbunden oder fluidverbindbar.

Die Erfindung hat den Vorteil, dass das Reinigungselement, das Drosselelement und das Füllkörperrigolenelement in eine Einheit integriert sind. Dabei sind die Funktionen Reinigen, Speichern und Abführen nach einem 3-in-1 Prinzip zu einem gemeinsamen Element miteinander kombiniert. Durch das Drosselelement ist die Füllkörperrigoleneinheit oder ein Füllkörperrigolensystem aus vielen Füllkörperrigolenelementen, die mit der erfindungsgemäßen Füllkörperrigoleneinheit verbunden sind, an ein Kanalisationsnetz anschließbar. Das Reinigungselement verhindert, dass die Füllkörperrigoleneinheit oder ein mit der Füllkörperrigoleneinheit verbundenes Füllkörperrigolensystem versandet oder verschlammt. Das Füllkörperrigolenelement speichert Fluid, bspw. Niederschlagswasser, oder ist dazu geeignet, und kann an ein Füllkörperrigolensystem aus einer Vielzahl von Füllkörperrigolenelementen angeschlossen werden, wodurch die Speicherkapazität erhöht wird. Die Füllkörperrigoleneinheit kann selbst mehrere Füllkörperrigolenelemente, bspw. 2, 3, 4 oder 5 Füllkörperrigolenelemente enthalten, um die Speicherkapazität der Füllkörperrigoleneinheit etwas zu erhöhen. Ein übliches Füllkörperrigolensystem weist mehr Füllkörperrigolenelemente als die erfindungsgemäße Füllkörperrigoleneinheit auf. Im Unterschied zur dem Füllkörperrigolensystem ist die erfindungsgemäße Füllkörperrigoleneinheit selbstständig als eine Einheit handhabbar, beispielsweise durch einen Gabelstapler auf einer Baustelle. Durch das in die erfindungsgemäße Füllkörperrigoleneinheit integrierte Füllkörperrigolenelement ist die erfindungsgemäße Füllkörperrigoleneinheit an ein Füllkörperrigolensystem mit einer größeren Anzahl von Füllkörperrigolenelementen einfach anschließbar.

Zwar ist aus dem EP 1 526 223 B1 eine Rigolenanordnung mit zwei Schächten bekannt. Die Schächte bilden aber keine Füllkörperrigoleneinheit im Sinne der Erfindung, weil die Schächte integraler Bestandteil eines großen Füllkörperrigolensystems mit einer Vielzahl von Füllkörperrigolenelementen sind und keine abgegrenzte Füllkörperrigoleneinheit bilden.

Die Erfindung umfasst sowohl eine Füllkörperrigoleneinheit, deren Füllkörperrigolenelement unbefüllt ist, d.h. ohne Füllkörper, wie Schotter, als auch eine Füllkörperrigoleneinheit, deren Füllkörperrigolenelement mit einem Füllkörper, wie Schotter, befüllt ist, wie dies bspw. im verbauten Zustand der Fall ist.

Bevorzugte Ausführungsformen der Erfindung sind in den Unteransprüchen angegeben.

Die Schachtelemente und das Füllkörperrigolenelement oder mehrere Füllkörperrigolenelemente können in ein einziges, einheitlich handhabbares Bauteil integriert sein. Die Füllkörperrigoleneinheit bildet ein selbstständiges Bauteil, das die Funktionen Reinigen, Speichern, Abführen erfüllt und als solches verbaut oder gelagert wird.

Bei einer bevorzugten Ausführungsform ist das Füllkörperrigolenelement oder sind mehrere Füllkörperrigolenelemente zwischen den Schachtelementen angeordnet. Dies hat den Vorteil, dass die Schachtelemente durch das Füllkörperrigolenelement voneinander beabstandet sind. Wenn das Füllkörperrigolenelement an ein übergeordnetes Füllkörperrigolensystem angeschlossen wird, bilden das Reinigungselement und das Drosselelement den Zulauf bzw. Ablauf für das Gesamtsystem.

Vorzugsweise sind die Schachtelemente und das Füllkörperrigolenelement oder mehrere Füllkörperrigolenelemente in ein- und derselben Ebene angeordnet. Die so gebildete Füllkörperrigoleneinheit ist kompakt und leicht zu verbauen. Bei einer Füllkörperrigoleneinheit, das aus mehreren vertikal übereinander angeordneten Ebenen aufgebaut ist, sind die Schachtelemente und das Füllkörperrigolenelement oder mehrere Füllkörperrigolenelemente in der untersten Ebene angeordnet. Dies hat den Vorteil, dass die Fluidströmung schwerkraftgetrieben ist. Auf Pumpen kann so verzichtet werden.

Im Rahmen der Erfindung wird auch der Verbau einer erfindungsgemäßen Füllkörperrigoleneinheit in der untersten Ebene eines Füllkörperrigolensystems offenbart und beansprucht, das aus mehreren, vertikal übereinander angeordneten Ebenen aus Füllkörperrigolenelementen besteht.

Wenn der Fluidzulauf des ersten Schachtelements und der Fluidablauf des zweiten Schachtelements in unterschiedlichen Höhenlagen angeordnet sind, beispielsweise wenn der Fluidzulauf höher als der Fluidablauf angeordnet ist, stellt sich ein Gefälle zwischen dem Fluidzulauf und dem Fluidablauf ein, sodass das Niederschlagswasser vom Reinigungselement durch das Füllkörperrigolenelement zum Drosselelement strömen kann.

Vorzugsweise sind die Fluidzuläufe und die Fluidabläufe jeweils horizontal angeordnet, wodurch der Anschluss in derselben Ebene des Füllkörperrigolensystems erleichtert wird.

Für einen einfachen und kompakten Aufbau kann die Fluidverbindung der Schachtelemente zu dem bzw. den Füllkörperrigolenelementen eine direkte Verbindung durch unmittelbar angrenzende Wandöffnungen bilden.

Bei einer besonders bevorzugten Ausführungsform sind die Schachtelemente als Schachtunterteile mit jeweils einer Zugangsöffnung für den Zugang von oben, einem geschlossenen Boden und geschlossenen Wänden ausgebildet. In den geschlossenen Wänden sind die Fluidzuläufe und die Fluidabläufe angeordnet.

Die Schachtelemente können Schachtaufbauten aufweisen, wodurch der Zugang zu den Schachtelementen und den darin angeordneten Funktionselementen erleichtert wird.

Das Reinigungselement weist vorzugsweise wenigstens ein Mittel zur Reinigung von Fluid aus der Gruppe umfassend ein Spaltsieb, Mittel zur Sedimentation, Mittel zu Adsorption und Mittel zur mechanischen Vorreinigung auf. Die vorstehend genannten Mittel zur Reinigung von Fluid können alleine oder in Kombination miteinander verwendet werden.

Bei einer besonders bevorzugten Ausführungsform ist eine Führungs- und/oder Halteeinrichtung im ersten Schachtelement für das Reinigungselement angeordnet. Die Führungs- und/oder Halteeinrichtung unterteilt das erste Schachtelement in eine Reinseite und eine Schmutzseite. Durch die Doppelfunktion der Führungs- und/oder Halteeinrichtung wird eine kompakte Bauweise erreicht, die zugleich Feststoffe vom Füllkörperrigolenelement abhält.

Die Führungs- und/oder Halteeinrichtung kann ein Rohr umfassen, das mit dem Fluidzulauf des ersten Schachtelements auf der Schmutzseite fluiddicht verbunden ist. Das Rohr weist eine Öffnung auf der Reinseite auf, die eine Fluidverbindung mit dem Fluidablauf des ersten Schachtelements bildet. Dazu kann die Öffnung beispielsweise gegenüber dem Fluidablauf des ersten Schachtelements angeordnet sein. Der Fluidablauf kann eine einfache Öffnung in der Seitenwand des Schachtelements bilden. Eine fluiddichte Verbindung ist nicht erforderlich, weil das Rohr auf der Schmutzseite fluiddicht mit dem Fluidzulauf verbunden ist. Das Rohr ist eine einfache und sichere Möglichkeit, das erste Schachtelemente in eine Reinseite und Schmutzseite zu unterteilen und gleichzeitig das Reinigungselement sicher zu halten.

Zum Halten des Reinigungselements, insbesondere des Spaltsiebs kann die Führungs- und/oder Halteeinrichtung, insbesondere das Rohr, Führungs- und/oder Halteschienen aufweisen, in denen das Spaltsieb angeordnet ist.

Bei einer besonders bevorzugten Ausführungsform umfasst das Drosselelement ein gesteuertes Drosselelement, das mit einem Stellmotor verbunden ist. Auf diese Weise kann die ausströmende Wassermenge an die jeweiligen Anforderungen der nachgeordneten Kanalisation angepasst werden.

Wenn der Stellmotor oberhalb des zweiten Schachtelements angeordnet ist, wird die Wartung und Montage des Stellmotors erleichtert.

Das Drosselelement kann auslaufseitig mit dem Fluidablauf des zweiten Schachtelements fluiddicht verbunden sein. Dies hat den Vorteil, dass die Zulaufseite des zweiten Schachtelements einfach und direkt mit einem Füllkörperrigolenelement verbunden sein kann, ohne dass die Drosselwirkung beeinträchtigt wird.

Das Drosselelement kann eine Drosselklappe, eine Drossel mit Plattenschieber oder eine Drossel zur mechanischen Rohrverformung umfassen.

Zusätzlich zu der Füllkörperrigoleneinheit werden die beiden Schachtelemente mit dem Reinigungselement bzw. dem Drosselelement separat als solches beansprucht, d.h. unabhängig vom Füllkörperrigolenelement.

Außerdem wird ein Füllkörperrigolensystem beansprucht, das eine Vielzahl von Füllkörperrigolenelementen und wenigstens eine erfindungsgemäße Füllkörperrigoleneinheit umfasst. Die erfindungsgemäße Füllkörperrigoleneinheit bildet also eine Untereinheit des übergeordneten Füllkörperrigolensystems.

Die Erfindung wird nachstehend anhand eines Ausführungsbeispiels unter Bezug auf die beigefügten, schematischen Zeichnungen näher mit weiteren Einzelheiten erläutert.

In diesen zeigen
- Fig. 1: eine perspektivische Ansicht eines Schachtelements mit einem Drosselelement nach einem erfindungsgemäßen Ausführungsbeispiel;
- Fig. 2: einen Schnitt des Schachtelements gemäß Fig. 1
- Fig. 3: eine perspektivische Ansicht eines Schachtelements mit einem Reinigungselement nach einem erfindungsgemäßen Ausführungsbeispiel;
- Fig. 4: einen Schnitt des Schachtelements gemäß Fig. 3
- Fig. 5: eine perspektivische Ansicht einer Füllkörperrigoleneinheit nach einem erfindungsgemäßen Ausführungsbeispiel und
- Fig. 6: einen Schnitt der Füllkörperrigoleneinheit nach Fig. 5

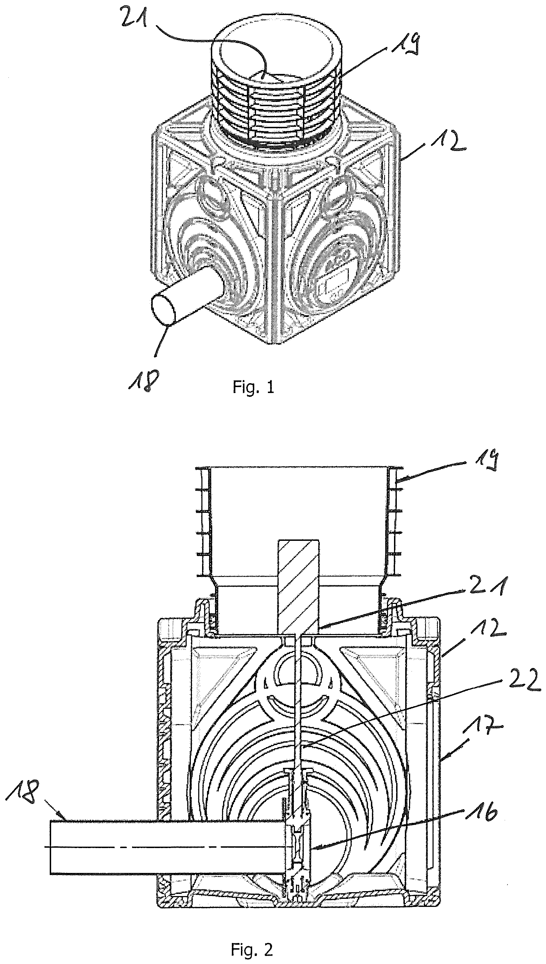

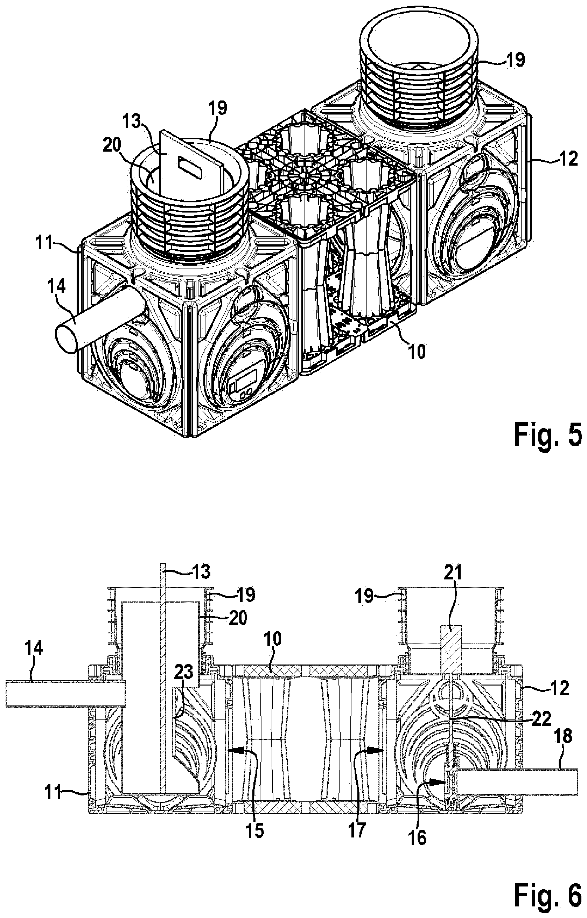

Die Figuren 1 bis 4 zeigen erste und zweite Schachtelemente 11, 12, die in der Füllkörperrigoleneinheit gemäß Figuren 5, 6 zusammen mit einem Füllkörperrigolenelement 10 integriert sind. Die Schachtelemente 11, 12 werden sowohl im Zusammenhang mit der Füllkörperrigoleneinheit als auch gesondert, d.h. für sich genommen offenbart und beansprucht.

Die in den Figuren 5, 6 gezeigte Füllkörperrigoleneinheit kann bspw. für die Regenwasserrückhaltung, die Speicherung von Regenwasser oder als Löschwasserspeicher im Zusammenhang mit einem Füllkörperrigolensystem verwendet werden. Weitere Anwendungen sind möglich.

Füllkörperrigolensysteme sind aus einzelnen Füllkörperrigolenelementen zusammengesetzt, die beispielsweise durch PE-Folienbahnen oder andere Mittel abgedichtet sind. Die Füllkörperrigolenelemente werden im Gebrauch mit einem Füllgut, beispielsweise mit Schotter aufgefüllt.

Die Füllkörperrigoleneinheit besteht, wie in den Figuren 5, 6 gezeigt, aus drei Komponenten, nämlich einem ersten Schachtelement 11 mit einem Reinigungselement 13, einem zweiten Schachtelement 12 mit einem Drosselelement 16 und einem Füllkörperrigolenelement 10.

In einer anderen Ausgestaltung kann die Füllkörperrigoleneinheit mehrere Füllkörperrigolenelemente 10 aufweisen. Die Füllkörperrigoleneinheit bildet ein selbstständiges Bauteil, das mehrere Funktionen vereint, nämlich eine Reinigungsfunktion, Speicherfunktion und Ablauffunktion. Dazu sind die vorstehend genannten Komponenten sowohl mechanisch als auch fluidtechnisch miteinander verbunden.

Das Füllkörperrigolenelement 10 ist zwischen den beiden Schachtelementen 11, 12 angeordnet. Die beiden Schachtelemente 11, 12 und das Füllkörperrigolenelement 10 sind in ein- und derselben Ebene angeordnet und weisen eine durchgehende, einheitliche Bodenfläche auf. Mit anderen Worten sind die beiden Schachtelemente 11, 12 und das Füllkörperrigolenelement 10 in einer Flucht angeordnet und bilden einen rechteckigen Block. Die Füllkörperrigoleneinheit weist einen Fluidzulauf 14 im ersten Schachtelement 11 und einen Fluidablauf 18 im zweiten Schachtelement 12 auf, sodass Regenwasser in die Füllkörperrigoleneinheit ein- und ausströmen kann.

Wie in Fig. 6 zu erkennen, ist in der Fluidzulauf 14 des ersten Schachtelements 11 höher als der Fluidablauf 18 des zweiten Schachtelements 12 angeordnet, sodass ein Gefälle zwischen den beiden Schachtelementen 11, 12 entsteht. Der Fluidzulauf 14 des ersten Schachtelements 11 und der Fluidablauf 18 des zweiten Schachtelements 12 sind horizontal angeordnet. Der Fluidzulauf 14 und der Fluidablauf 18 erstrecken sich in entgegengesetzten Richtungen. Eine andere Orientierung, beispielsweise über Eck ist möglich. Die Orientierung des Fluidzulauf 14 und des Fluidablauf 18 hängt vom Einbau und der entsprechenden Orientierung des jeweiligen Funktionselements, d.h. des Reinigungselements 13 und des Drosselelement 16 im jeweiligen Schachtelement 11, 12 ab.

Bei dem Füllkörperrigolenelement 10 handelt es sich um einen an sich bekanntes Rigolenelement, das aus zwei Grundelementen aufgebaut ist, die jeweils gegengleich angeordnete Säulen aufweisen. Die Säulen sind stirnseitig miteinander verbunden. Die beiden Grundelemente bilden den Boden und den Deckel des Füllkörperrigolenelements 10. Die Außenseiten der Füllkörperrigoleneinheit sind im Bereich des Füllkörperrigolen Elements 10 durch gitterförmige Seitenwände begrenzt, die aus Gründen der Darstellung in Fig. 5 weggelassen sind oder im Gebrauch durch Seitenwände angrenzender Füllkörperrigolenelemente des Gesamtsystems gebildet sind.

Wie in Fig. 5 zu erkennen, grenzt das Füllkörperrigolenelement 10 jeweils unmittelbar an das benachbarte Schachtelement 11, 12 an. In diesem Bereich entfallen die Seitenwände des Füllkörperrigolenelements 10, sodass die Seitenwände des ersten Schachtelements 11 bzw. die Seitenwände des zweiten Schachtelements 12 die Seitenflächen des Füllkörperrigolenelement 10 begrenzen. Auf diese Weise wird die direkte Fluidverbindung zwischen den beiden Schachtelementen 11, 12 und dem Füllkörperrigolenelement 10 gebildet.

Das Füllkörperrigolenelement 10 ist unter der Marke Stormbrixx der Anmelderin bekannt. Andere Rigolenelemente können verwendet werden.

Bei den beiden Schachtelementen 11, 12 handelt es sich um Schachtunterteile, die jeweils einen geschlossenen Boden und geschlossene Wände aufweisen. Die Schachtelemente 11, 12 weisen jeweils eine Zugangsöffnung für den Zugang von oben auf, die mit einem Schachtaufbau 19 verbunden ist. Durch die Schachtaufbauten 19 werden die in den beiden Schachtelementen 11, 12 angeordneten Funktionselemente montiert bzw. sind für Wartungsarbeiten zugänglich. Wie in Fig. 6 zu erkennen, weist das erste Schachtelement 11 den Fluidzulauf 14 auf, der in der Form eines Rohres durch die Seitenwand ins Innere des ersten Schachtelements 11 ragt. Das zweite Schachtelement 12 weist den Fluidablauf 18 in der Form eines Rohres auf, das durch die Seitenwand des zweiten Schachtelements 12 nach innen hineinragt.

Auf der dem Fluidzulauf 14 gegenüber angeordneten Seite des ersten Schachtelements 11 ist eine Wandöffnung ausgebildet, durch die das erste Schachtelement 11 mit dem angrenzenden Füllkörperrigolenelement 10 in direkter Fluidverbindung steht. In entsprechender Weise ist auf der dem Fluidablauf 18 gegenüber angeordneten Seite des zweiten Schachtelements 12 eine Wandöffnung ausgebildet durch die das zweite Schachtelement 12 mit dem angrenzenden Füllkörperrigolenelement 10 in direkter Fluidverbindung steht.

Durch den Fluidzulauf 14 gelangt im Gebrauch Regenwasser in das erste Schachtelement 11 und von dort durch die Wandöffnung über das Füllkörperrigolenelement 10 in das zweite Schachtelement 12. Von dort wird das Regenwasser durch den Fluidablauf 18 abgeführt.

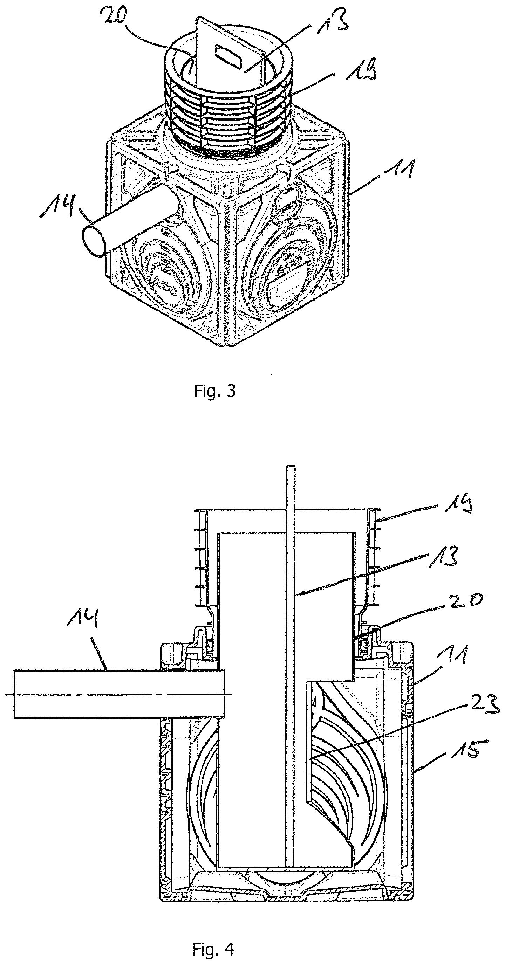

Nachstehend wird der Aufbau des ersten Schachtelements 11 anhand der Figuren 3, 4 näher erläutert. Das erste Schachtelement 11 weist den bereits angesprochenen Fluidzulauf 14 in der Form eines Rohres auf, das im oberen Bereich des Schachtelements 11 in horizontaler Richtung ins Innere des Schachtelements 11 hineinragt. Auf der gegenüberliegenden Seite des ersten Schachtelements 11 ist ein Fluidablauf 15 ausgebildet und zwar in der Form der bereits vorstehend genannten Wandöffnung. Zwischen dem Fluidzulauf 14 und dem Fluidablauf 15 ist das Reinigungselement 13 angeordnet. Das Reinigungselement 13 ist in dem Beispiel gemäß Fig. 4 als Spaltsieb ausgebildet, dass sich quer zum Fluidzulauf 14 erstreckt. Andere Reinigungselemente sind möglich.

Das Reinigungselement 13, konkret das Spaltsieb ist in einer Führungs- und/oder Halteeinrichtung 20 angeordnet. Die Führungs- und/oder Halteeinrichtung 20 unterteilt das erste Schachtelement 11 in eine Reinseite und eine Schmutzseite. Dazu ist die Führungs- und/oder Halteeinrichtung 20 als vertikales Rohr ausgebildet, dass zumindest unten geschlossen ist.

Ortsangaben, wie unten, oben, seitlich usw. beziehen sich auf den verbauten Zustand der jeweils diskutierten Elemente.

Das Rohr ist im Inneren des ersten Schachtelements 11 angeordnet und mit diesem fest verbunden, beispielsweise verschweißt. Im Rohr sind Führungs- und/oder Halteschienen (nicht dargestellt) ausgebildet, in denen das Spaltsieb befestigt ist. Zur Wartung kann das Spaltsieb aus den Schienen herausgezogen werden.

Wie in Fig. 4 zu erkennen, ist der Fluidzulauf 14 fluiddicht mit der Führungs- und/oder Halteeinrichtung 20 verbunden. Konkret ist das den Fluidzulauf 14 bildende Rohr mit dem die Führungs- und/oder Halteeinrichtung 20 bildenden Rohr verbunden, beispielsweise verschweißt. Das durch den Fluidzulauf 14 einströmende Regenwasser gelangt somit ausschließlich in die Führungs- und/oder Halteeinrichtung 20 und zwar in den vor dem Spaltsieb gebildeten Absetzraum. Auf der anderen Seite des Spaltsiebs weist das Rohr eine Öffnung 23 auf, die ins Innere des ersten Schachtelements 11 mündet. Somit steht die Führungs- und/oder Halteeinrichtung 20 in Fluidverbindung mit dem Fluidablauf 15. Diese Seite bildet die Reinseite.

Das zweite Schachtelement 12 ist in Fig. 1, 2 dargestellt. Das zweite Schachtelement 12 weist ein Schachtunterteil auf, das wie das erste Schachtelement 11 aufgebaut ist. In diesem Zusammenhang wird auf die Ausführungen zum ersten Schachtelement 11 verwiesen.

Das zweite Schachtelement 12 weist ein Drosselelement 16 auf, das im unteren Bereich des zweiten Schachtelements 12 angeordnet ist. Das Drosselelement 16 ist direkt mit dem Fluidablauf 18, konkret mit dem den Fluidablauf 18 bildenden Rohr fluiddicht verbunden. Auf der dem Fluidablauf 18 gegenüberliegenden Seite des zweiten Schachtelements 12 ist der Fluidzulauf 17 des zweiten Schachtelements 12 in der Form einer Wandöffnung ausgebildet. Die Wandöffnung grenzt im eingebauten Zustand unmittelbar an das Füllkörperrigolenelement 10 an, sodass eine direkte Fluidverbindung zwischen dem zweiten Schachtelement 12 und dem Füllkörperrigolenelement 10 gebildet ist. Durch die Wandöffnung wird im Gebrauch das zweite Schachtelement 12 mit gereinigtem Regenwasser geflutet. Durch das Drosselelement 16 wird in geregelter Weise das Regenwasser durch den Fluidablauf 18 abgeführt. Der Fluidablauf 18 befindet sich im unteren Bereich des Schachtelements 12 und erstreckt sich in der Form eines Rohres horizontal ausgehend vom Drosselelement 16 aus dem zweiten Schachtelement 12 hinaus.

Das Drosselelement 16 ist gesteuert, insbesondere fernsteuerbar, sodass eine dynamische Regelung des Ablaufs von Regenwasser möglich ist. Dazu ist das Drosselelement 16 mit einem Stellmotor 21 durch eine Stellstange 22 verbunden. Der Stellmotor 21 ist oberhalb des zweiten Schachtelements 12 im Schachtaufbau 19 angeordnet. Das Drosselelement 16 kann beispielsweise eine Drosselklappe oder einem Plattenschieber oder Mittel zur mechanischen Rohrverformung umfassen.

Im Gebrauch wird die in den Figuren 5, 6 dargestellte Füllkörperrigoleneinheit in ein Füllkörperrigolensystem integriert, das aus einer Vielzahl von Füllkörperrigolenelementen 10 besteht. Wenn die Füllkörperrigolenelemente 10 in mehreren Ebenen angeordnet sind, wird die Füllkörperrigoleneinheit in der untersten Ebene eingebaut. Dazu wird das Füllkörperrigolenelement 10 der Füllkörperrigoleneinheit mit anderen Füllkörperrigolenelementen des Gesamtsystems in an sich bekannter Weise verbunden, sodass die Füllkörperrigoleneinheit den Zu- und Ablauf des Gesamtsystems bildet.

Zusammengefasst wird eine Füllkörperrigoleneinheit vorgeschlagen, die sämtliche oben genannten Bauteile in einem Bauteil umfasst. Dazu werden Reinigungseinheit und Drosseleinheit in die Füllkörperrigole bzw. Füllkörperrigoleneinheit integriert.

Dazu werden Reinigungseinheit und Drosseleinheit jeweils in einen zum Füllkörperrigolensystem passenden Schacht integriert. Damit ist sichergestellt, dass die Schächte mit der Funktion zum Füllkörperrigolensystem passen und die gesamte Füllkörperrigole in einer Baugrube verbaut werden kann. Reinigungs- und Drosseleinheit sind im unteren Bereich (unterste Ebene) der Füllkörperrigole angeordnet.

Die Reinigungseinheit im Schacht umfasst z.B. ein Spaltsieb oder Sedimentation, Adsorption und jede Art mechanischer Vorreinigung zur Filterung des einströmenden Wassers. Das Spaltsieb ist in ein im Schacht montiertes Rohr (Führungszylinder) einschiebbar und damit wartungsfreundlich, da es bei Verschmutzung einfach nach oben herausgezogen werden kann. Je nachdem wie hoch die Füllköperrigole bzw. die Füllkörperrigoleneinheit ausgebildet ist, kann zwischen Spaltsieb und der Oberfläche der Rigole eine entsprechende Schieberverlängerung ausgebildet werden. Das einströmende Wasser wird durch das Zulaufrohr direkt in den Führungszylinder zum Spaltsieb geführt und läuft anschließend durch das Spaltsieb gereinigt in die Füllkörperrigole. Zwischen dem Boden des Schachtkörpers und dem Spaltsieb ist ein Abstand vorgesehen. Der Absetzraum im Führungszylinder vor dem Spaltsieb sollte in Abhängigkeit der Beaufschlagung in regelmäßigen Abständen gewartet werden. Gegenüber der Auslaufseite des Spaltsiebes liegt eine Öffnung im Führungszylinder, so dass das Wasser aus dem Spaltsieb in die Rigole fließen kann. Die Öffnung des Führungszylinders ist in seiner Größe so gewählt, dass das Wasser ungehindert ohne unnötigen Strömungswiderstand in die Rigole fließen kann. Das Spaltsieb ist senkrecht angeordnet und ist im Führungszylinder über beidseitig angeordnete Führungsschienen geführt. Der Führungszylinder kann sich auf Rippen des Schachtkörpers abstützen und kann z.B. auf diesem fest verschweißt werden.

Die Drosseleinheit kann in ihrem Inneren eine Drosselklappe/Anflanschklappe aufweisen, mit der sich der austretende Wasserstrom regeln lässt.

### Bezugszeichenliste

- 10: Füllkörperrigolenelement
- 11: erstes Schachtelement
- 12: zweites Schachtelement
- 13: Reinigungselement
- 14: Fluidzulauf des ersten Schachtelements
- 15: Fluidablauf des ersten Schachtelements
- 16: Drosselelement
- 17: Fluidzulauf des zweiten Schachtelements
- 18: Fluidablauf des zweiten Schachtelements
- 19: Schachtaufbau
- 20: Führungs- oder Halteeinrichtung
- 21: Stellmotor
- 22: Stellstange
- 23: Öffnung

## Patentansprüche

1. Füllkörperrigoleneinheit mit wenigstens einem Füllkörperrigolenelement (10), wenigstens einem ersten Schachtelement (11) und wenigstens einem zweiten Schachtelement (12), wobei
- ein Reinigungselement (13) im ersten Schachtelement (11) zwischen einem Fluidzulauf (14) und einem Fluidablauf (15) angeordnet ist,
- ein Drosselelement (16) im zweiten Schachtelement (12) zwischen einem Fluidzulauf (17) und einem Fluidablauf (18) angeordnet ist und
- die Schachtelemente (11, 12) mit einem oder mehreren Füllkörperrigolenelementen (10) fluidverbunden oder fluidverbindbar sind.

2. Füllkörperrigoleneinheit nach Anspruch 1
**dadurch gekennzeichnet, dass**
die Schachtelemente (11, 12) und das Füllkörperrigolenelement (10) oder mehrere Füllkörperrigolenelemente (10) in ein einziges, einheitlich handhabbares Bauteil integriert sind.

3. Füllkörperrigoleneinheit nach Anspruch 1 oder 2
**dadurch gekennzeichnet, dass**
das Füllkörperrigolenelement (10) oder mehrere Füllkörperrigolenelemente (10) zwischen den Schachtelementen (11, 12) angeordnet sind.

4. Füllkörperrigoleneinheit nach einem der Ansprüche 1 bis 3
**dadurch gekennzeichnet, dass**
die Schachtelemente (11, 12) und das Füllkörperrigolenelement (10) oder mehrere Füllkörperrigolenelemente (10) in derselben Ebene, insbesondere in einer untersten Ebene bei einem Füllkörperrigoleneinheit mit mehrfachen Ebenen angeordnet sind.

5. Füllkörperrigoleneinheit nach einem der vorhergehenden Ansprüche
**dadurch gekennzeichnet, dass**
der Fluidzulauf (14) des ersten Schachtelements (11) und der Fluidablauf (18) des zweiten Schachtelements (12) in unterschiedlichen Höhenlagen angeordnet sind und/oder die Fluidzuläufe (14, 17) und die Fluidabläufe (15, 18) jeweils horizontal angeordnet sind.

6. Füllkörperrigoleneinheit nach einem der vorhergehenden Ansprüche
**dadurch gekennzeichnet, dass**
die Fluidverbindung der Schachtelemente (11, 12) zu dem bzw. den Füllkörperrigolenelementen (10) eine direkte Verbindung durch unmittelbar angrenzende Wandöffnungen bildet und/oder die Schachtelemente (11, 12) als Schachtunterteile mit jeweils einer Zugangsöffnung für den Zugang von oben, einem geschlossenen Boden und geschlossenen Wände ausgebildet sind, in denen die Fluidzuläufe (14, 17) und die Fluidabläufe (15, 18) angeordnet sind, und/oder die Schachtelemente (11, 12) Schachtaufbauten (19) aufweisen.

7. Füllkörperrigoleneinheit nach einem der vorhergehenden Ansprüche
**dadurch gekennzeichnet, dass**
das Reinigungselement (13) wenigstens ein Mittel zur Reinigung von Fluid aus der Gruppe Spaltsieb, Mittel zur Sedimentation, Mittel zu Adsorption und Mittel zur mechanischen Vorreinigung aufweist.

8. Füllkörperrigoleneinheit nach einem der vorhergehenden Ansprüche
**dadurch gekennzeichnet, dass**
eine Führungs- und/oder Halteeinrichtung (20) im ersten Schachtelement (11) für das Reinigungselement (13) angeordnet ist, die das erste Schachtelement (11) in eine Reinseite und Schmutzseite unterteilt.

9. Füllkörperrigoleneinheit nach Anspruch 8
**dadurch gekennzeichnet, dass**
die Führungs- und/oder Halteeinrichtung (20) ein Rohr umfasst, das mit dem Fluidzulauf (14) des ersten Schachtelements (11) auf der Schmutzseite fluiddicht verbunden ist und eine Öffnung (23) auf der Reinseite aufweist, die ein Fluidverbindung mit dem Fluidablauf (15) des ersten Schachtelements (11) bildet.

10. Füllkörperrigoleneinheit nach Anspruch 8 oder 9
**dadurch gekennzeichnet, dass**
die Führungs- oder Halteeinrichtung (20), insbesondere das Rohr Führungs- oder Halteschienen aufweist, in denen das Spaltsieb angeordnet ist.

11. Füllkörperrigoleneinheit nach einem der vorhergehenden Ansprüche
**dadurch gekennzeichnet, dass**
das Drosselelement (16) ein gesteuertes Drosselelement umfasst, das mit einem Stellmotor (21) verbunden ist.

12. Füllkörperrigoleneinheit nach Anspruch 11
**dadurch gekennzeichnet, dass**
der Stellmotor (21) oberhalb des zweiten Schachtelements (12) angeordnet ist.

13. Füllkörperrigoleneinheit nach einem der vorhergehenden Ansprüche
**dadurch gekennzeichnet, dass**
das Drosselelement (16) auslaufseitig mit dem Fluidablauf (18) des zweiten Schachtelements (12) fluiddicht verbunden ist und/oder das Drosselelement (16) eine Drosselklappe oder eine Drossel mit Plattenschieber oder eine Drossel zur mechanischen Rohrverformung umfasst.

14. Füllkörperrigolensystem umfassend mehrere Füllkörperrigolenelemente und wenigstens eine Füllkörperrigoleneinheit nach Anspruch 1, die mit den Füllkörperrigolenelementen verbunden ist.

## Claims

1. Drainage body unit having at least one drainage body element (10), at least one first shaft element (11) and at least one second shaft element (12),
wherein
- a cleaning element (13) is arranged in the first shaft element (11) between a fluid inlet (14) and a fluid outlet (15),
- a throttle element (16) is arranged in the second shaft element (12) between a fluid inlet (17) and a fluid outlet (18), and
- the shaft elements (11, 12) are fluid-connected or fluid-connectable to one or more drainage body elements (10).

2. Drainage body unit according to claim 1, **characterized in that** the shaft elements (11, 12) and the drainage body element (10) or a plurality of drainage body elements (10) are integrated into a single, uniformly manageable component.

3. Drainage body unit according to claim 1 or 2, **characterized in that** the drainage body element (10) or a plurality of drainage body elements (10) are arranged between the shaft elements (11, 12).

4. Drainage body unit according to one of claims 1 to 3, **characterized in that** the shaft elements (11, 12) and the drainage body element (10) or a plurality of drainage body elements (10) are arranged in the same plane, in particular in a lowermost plane in a drainage body unit with multiple planes.

5. Drainage body unit according to one of the preceding claims, **characterized in that** the fluid inlet (14) of the first shaft element (11) and the fluid outlet (18) of the second shaft element (12) are arranged at different elevations and/or the fluid inlets (14, 17) and the fluid outlets (15, 18) are each arranged horizontally.

6. Drainage body unit according to one of the preceding claims, **characterized in that** the fluid connection of the shaft elements (11, 12) to the drainage body element(s) (10) forms a direct connection through directly adjacent wall openings and/or the shaft elements (11, 12) are designed as shaft bases each with an access opening for access from above, a closed base and closed walls, in which the fluid inlets (14, 17) and the fluid outlets (15, 18) are arranged, and/or the shaft elements (11, 12) have shaft superstructures (19).

7. Drainage body unit according to one of the preceding claims, **characterized in that** the cleaning element (13) has at least one means for cleaning fluid from the group of slotted screen, means for sedimentation, means for adsorption and means for mechanical pre-cleaning.

8. Drainage body unit according to one of the preceding claims, **characterized in that** a guide and/or holding device (20) is arranged in the first shaft element (11) for the cleaning element (13), which divides the first shaft element (11) into a clean side and a dirty side.

9. Drainage body unit according to claim 8, **characterized in that** the guide and/or holding device (20) comprises a pipe which is connected in a fluid-tight manner to the fluid inlet (14) of the first shaft element (11) on the dirty side and has an opening (23) on the clean side, which forms a fluid connection with the fluid outlet (15) of the first shaft element (11).

10. Drainage body unit according to claim 8 or 9, **characterized in that** the guide or holding device (20), in particular the pipe, has guide or holding rails in which the slotted screen is arranged.

11. Drainage body unit according to one of the preceding claims, **characterized in that** the throttle element (16) comprises a controlled throttle element which is connected to a servomotor (21).

12. Drainage body unit according to claim 11, **characterized in that** the servomotor (21) is arranged above the second shaft element (12).

13. Drainage body unit according to one of the preceding claims, **characterized in that** the throttle element (16) is connected in a fluid-tight manner on the outlet side to the fluid outlet (18) of the second shaft element (12) and/or the throttle element (16) comprises a throttle valve or a throttle with a knife gate valve or a throttle for mechanical pipe deformation.

14. Drainage body system comprising a plurality of drainage body elements and at least one drainage body unit according to claim 1, which is connected to the drainage body elements.

## Revendications

1. Unité de rigole à corps de remplissage avec au moins un élément de rigole à corps de remplissage (10), au moins un premier élément de regard (11) et au moins un deuxième élément de regard (12), dans lequel
- un élément d'épuration (13) est disposé dans le premier élément de regard (11) entre une arrivée de fluide (14) et une sortie de fluide (15),
- un élément d'étranglement (16) est disposé dans le deuxième élément de regard (12) entre une arrivée de fluide (17) et une sortie de fluide (18) et
- les éléments de regard (11, 12) sont ou peuvent être en communication fluidique avec un ou plusieurs éléments de rigole à corps de remplissage (10).

2. Unité de rigole à corps de remplissage selon la revendication 1, **caractérisée en ce que** les éléments de regard (11, 12) et l'élément de rigole à corps de remplissage (10) ou plusieurs éléments de rigole à corps de remplissage (10) sont intégrés dans un même élément de construction pouvant être manipulé d'une pièce.

3. Unité de rigole à corps de remplissage selon la revendication 1 ou 2 **caractérisée en ce que** l'élément de rigole à corps de remplissage (10) ou plusieurs éléments de rigole à corps de remplissage (10) sont disposés entre les éléments de regard (11, 12).

4. Unité de rigole à corps de remplissage selon l'une des revendications 1 à 3, **caractérisée en ce que** les éléments de regard (11, 12) et l'élément de rigole à corps de remplissage (10) ou plusieurs éléments de rigole à corps de remplissage (10) sont disposés au même niveau, en particulier au niveau le plus bas dans une unité de rigole à corps de remplissage à plusieurs niveaux.

5. Unité de rigole à corps de remplissage selon l'une des revendications précédentes, **caractérisée en ce que** l'arrivée de fluide (14) du premier élément de regard (11) et la sortie de fluide (18) du deuxième élément de regard (12) sont disposées à des hauteurs différentes et/ou les arrivées de fluide (14, 17) et les sorties de fluide (15, 18) sont disposées à l'horizontale.

6. Unité de rigole à corps de remplissage selon l'une des revendications précédentes, **caractérisée en ce que** la communication fluidique des éléments de regard (11, 12) avec le ou les éléments de rigole à corps de remplissage (10) forme une communication directe à travers des ouvertures directement contiguës dans les parois et/ou les éléments de regard (11, 12) sont conçus comme des parties inférieures de regard avec chacune une ouverture d'accès pour l'accès par le haut, un fond fermé et des parois fermées, dans lesquelles les arrivées de fluide (14, 17) et les sorties de fluide (15, 18) sont disposées, et/ou les éléments de regard (11, 12) comportent des superstructures de regard (19).

7. Unité de rigole à corps de remplissage selon l'une des revendications précédentes, **caractérisée en ce que** l'élément d'épuration (13) comporte au moins un moyen pour l'épuration de fluide parmi le groupe comprenant un tamis à fentes, des moyens de sédimentation, des moyens d'adsorption et des moyens de préépuration mécaniques.

8. Unité de rigole à corps de remplissage selon l'une des revendications précédentes, **caractérisée en ce qu'**un dispositif de guidage et/ou de maintien (20) est disposé dans le premier élément de regard (11) pour l'élément d'épuration (13) et divise le premier élément de regard (11) entre un côté propre et un côté sale.

9. Unité de rigole à corps de remplissage selon la revendication 8, **caractérisée en ce que** le dispositif de guidage et/ou de maintien (20) comprend un tuyau qui communique de façon étanche au fluide avec l'arrivée de fluide (14) du premier élément de regard (11) du côté sale et qui présente une ouverture (23) du côté propre qui forme une communication fluidique avec la sortie de fluide (15) du premier élément de regard (11).

10. Unité de rigole à corps de remplissage selon la revendication 8 ou 9, **caractérisée en ce que** le dispositif de guidage et/ou de maintien (20), en particulier le tuyau, présente des rails de guidage ou de maintien dans lesquels le tamis à fentes est disposé.

11. Unité de rigole à corps de remplissage selon l'une des revendications précédentes, **caractérisée en ce que** l'élément d'étranglement (16) est un élément d'étranglement régulé qui est relié à un moteur de réglage (21).

12. Unité de rigole à corps de remplissage selon la revendication 11, **caractérisée en ce que** le moteur de réglage (21) est disposé au-dessus du deuxième élément de regard (12).

13. Unité de rigole à corps de remplissage selon l'une des revendications précédentes, **caractérisée en ce que** l'élément d'étranglement (16) communique de façon étanche au fluide du côté de la sortie avec la sortie de fluide (18) du deuxième élément de regard (12) et/ou l'élément d'étranglement (16) comprend un clapet d'étranglement ou un étranglement avec une vanne à sièges parallèles ou un étranglement pour la déformation mécanique du tuyau.

14. Système de rigole à corps de remplissage comprenant plusieurs éléments de rigole à corps de remplissage et au moins une unité de rigole à corps de remplissage selon la revendication 1, qui est reliée aux éléments de rigole à corps de remplissage.
